# EUROPEAN PATENT APPLICATION

(11) **EP 3 854 756 A1**
(43) Date of publication of application: **28.07.2021**
(21) Application number: 19923726.4
(22) Date of filing: 20.11.2019
(51) Int. Cl.: C01F 11/18, C01B 32/50, C01D 7/07, B01D 53/62, C01B 32/60

(54) **METHOD FOR FIXING CARBON DIOXIDE, METHOD FOR PRODUCING FIXED CARBON DIOXIDE, AND DEVICE FOR PRODUCING FIXED CARBON DIOXIDE**

(71) Applicant: Sorimachi, Kenji, Takasaki-shi, Gunma 370-0041 (JP)
(72) Inventor: SORIMACHI Kenji, Takasaki-shi, Gunma 370-0041 (JP)
(74) Representative: J A Kemp LLP
(86) International application number: PCT/JP2019/045389
(87) International publication number: WO 2021/100134

(57) **Abstract**

The present invention provides a new method for fixing carbon dioxide. The method for fixing carbon dioxide of the present invention includes: a first contact step of bringing a solution containing sodium hydroxide into contact with a gas containing carbon dioxide; and a second contact step of adding at least one of a chloride of a Group 2 element or a chloride of a divalent metal element to the solution after the first contact step.

## Description

### TECHNICAL FIELD

The present invention relates to a method for fixing carbon dioxide, a method for producing fixed carbon dioxide, and a fixed carbon dioxide production apparatus.

### BACKGROUND ART

As a method for fixing carbon dioxide, for example, Patent Literature 1 describes a method for producing sodium carbonate by reacting an aqueous sodium hydroxide solution with a combustion exhaust gas containing carbon dioxide. However, new methods for fixing carbon dioxide are required.

### Citation List

### Patent Literature

Patent Literature 1: JPH6(1994)-263433 A

### SUMMARY OF INVENTION

### Technical Problem

With the foregoing in mind, it is an object of the present invention to provide a new method for fixing carbon dioxide, method for producing fixed carbon dioxide, and fixed carbon dioxide production apparatus.

### Solution to Problem

In order to achieve the above object, the present invention provides a method for fixing carbon dioxide, including: a first contact step of bringing a solution containing sodium hydroxide into contact with a gas containing carbon dioxide; and a second contact step of adding at least one of a chloride of a Group 2 element or a chloride of a divalent metal element to the solution after the first contact step.

The present invention also provides a method for producing fixed carbon dioxide, including: a fixation step of fixing carbon dioxide, wherein the fixation step is carried out by the method for fixing carbon dioxide according to the present invention.

The present invention also provides a fixed carbon dioxide production apparatus, including: a contact unit that brings a solution containing sodium hydroxide into contact with a gas containing carbon dioxide; and an adding unit that adds at least one of a chloride of a Group 2 element or a chloride of a divalent metal element to the solution.

### Advantageous Effects of Invention

The present invention can provide a new method for fixing carbon dioxide.

### BRIEF DESCRIPTION OF DRAWINGS

[FIG. 1] FIG. 1 is a photograph of mixed liquids containing sodium hydroxide and calcium chloride before and after contact with carbon dioxide in Reference Example 1.
[FIG. 2] FIG. 2 is a graph showing the weight of the precipitate produced in the mixed liquid due to contact with carbon dioxide in Reference Example 1.
[FIG. 3] FIG. 3 is a graph showing the weight of the precipitate produced in the mixed liquid due to contact with carbon dioxide in Reference Example 1.
[FIG. 4] FIG. 4 is a graph showing the carbon dioxide concentration in the vessel after contact in Reference Example 2.
[FIGs. 5A and 5B] FIGs. 5A and 5B are diagrams showing the shape of an octagonal prism plastic bottle in Reference Example 2.
[FIG. 6] FIG. 6 is a graph showing the carbon dioxide concentration in the vessel after contact in Reference Example 2.
[FIG. 7] FIG. 7 is a graph showing the carbon dioxide concentration in the vessel after contact in Reference Example 2.
[FIG. 8] FIG. 8 is a diagram showing a state where contact is carried out by spraying in Reference Example 3.
[FIG. 9] FIG. 9 is a graph showing the carbon dioxide concentration in the vessel after contact in Reference Example 3.
[FIG. 10] FIG. 10 is a diagram showing a contact unit in Reference Example 3.
[FIG. 11] FIG. 11 is a graph showing the carbon dioxide concentration in the vessel after contact in Reference Example 3.
[FIG. 12] FIG. 12 is a schematic diagram showing an example of a contact unit.
[FIGs. 13A and 13B] FIGs. 13A and 13B are diagrams each showing an example of a vessel.
[FIG. 14] FIG. 14 is a schematic diagram showing an example of a gas feeding unit.
[FIG. 15] FIG. 15 is a graph showing the weight of the precipitate produced in the mixed liquid due to contact with carbon dioxide in Example 1.
[FIG. 16] FIG. 16 is a graph showing the weight of the precipitate produced in the mixed liquid due to contact with carbon dioxide in Example 1.
[FIG. 17] FIG. 17 is a graph showing the weight of the precipitate produced in the mixed liquid due to contact with carbon dioxide in Example 2.
[FIG. 18] FIG. 18 is a graph showing the weight of the precipitate produced in the mixed liquid due to contact with carbon dioxide in Example 3.
[FIG. 19] FIG. 19 is a diagram showing a state where contact is performed by shaking in Reference Example 2.
[FIG. 20] FIG. 20 is a graph showing the carbon dioxide concentration in the vessel after contact in Reference Example 2.
[FIG. 21] FIG. 21 is a diagram showing a state where contact is performed by bubbling in Reference Example 4.
[FIG. 22] FIG. 22 is a graph showing the weight of the precipitate produced in the mixed liquid due to contact with carbon dioxide in Reference Example 4.
[FIG. 23] FIG. 23 is a schematic diagram illustrating the form of a pipe in Reference Example 4.
[FIG. 24] FIG. 24 is a graph showing the carbon dioxide concentration in the vessel after contact in Reference Example 4.
[FIG. 25] FIG. 25 is a graph showing the carbon dioxide concentration in the vessel after contact in Reference Example 4.
[FIG. 26] FIG. 26 is a graph showing the carbon dioxide concentration in the vessel after contact in Reference Example 4.
[FIG. 27] FIG. 27 is a graph showing the carbon dioxide concentration in the vessel after contact in Reference Example 4.
[FIG. 28] FIG. 28 is a graph showing the carbon dioxide concentration in the vessel after contact in Reference Example 5.
[FIG. 29] FIG. 29 is a diagram showing a state where contact is performed by bubbling in Reference Example 5.
[FIG. 30] FIG. 30 is a graph showing the carbon dioxide concentration in the vessel after contact in Reference Example 5.
[FIG. 31] FIG. 31 is a graph showing the carbon dioxide concentration in the vessel after contact in Reference Example 5.
[FIG. 32] FIG. 32 is a graph showing the weight of the precipitate produced in the mixed liquid due to contact with carbon dioxide in Reference Example 6.
[FIG. 33] FIG. 33 is a graph showing the carbon dioxide concentration in the vessel after contact in Reference Example 6.
[FIG. 34] FIG. 34 is a graph showing the weight of the precipitate produced in the mixed liquid due to contact with carbon dioxide in Reference Example 7.

### DESCRIPTION OF EMBODIMENTS

In the method for fixing carbon dioxide of the present invention, for example, at least one of the chloride of a Group 2 element or the chloride of a divalent metal element is calcium chloride.

In the method for fixing carbon dioxide of the present invention, for example, a concentration of the sodium hydroxide in the solution is 0.05 N or more.

In the method for fixing carbon dioxide of the present invention, for example, a concentration of the calcium chloride in a mixed liquid after addition is 0.05 mol/l or more.

In the method for fixing carbon dioxide of the present invention, for example, in at least one of the first contact step and the second contact step, the solution and the mixed liquid are brought into contact with the gas by feeding the gas into the solution and the mixed liquid after addition.

In the method for fixing carbon dioxide of the present invention, for example, in at least one of the first contact step and the second contact step, a temperature of the solution and a temperature of the mixed liquid after addition are 70°C or higher.

The method for fixing carbon dioxide of the present invention further includes a cooling step of cooling the mixed liquid after addition after the second contact step, for example.

In the fixed carbon dioxide production apparatus of the present invention, for example, at least one of the chloride of a Group 2 element or the chloride of a divalent metal element is calcium chloride.

In the fixed carbon dioxide production apparatus of the present invention, for example, the contact unit includes: a vessel that can contain the solution; and a gas feeding unit that can feed the gas into the solution.

The fixed carbon dioxide production apparatus of the present invention further includes a cooling unit that cools the solution after being reacted with the gas, for example.

Terms used in the present specification each have a meaning commonly used in the art, unless otherwise stated.

Embodiments of the present invention will be described below with reference to drawings.

### (Method for fixing carbon dioxide)

The method for fixing carbon dioxide of the present invention includes: a first contact step of bringing a solution containing sodium hydroxide (NaOH) into contact with a gas containing carbon dioxide (CO₂); and a second contact step of adding at least one of a chloride of a Group 2 element (alkaline earth metal) or a chloride of a divalent metal element to the solution after the first contact step. In the method for fixing carbon dioxide of the present invention, other configurations and conditions are not particularly limited.

In the present invention, "fixation of carbon dioxide (also referred to as fixation)" means, for example, reducing the carbon dioxide concentration in a gas containing carbon dioxide by removing carbon dioxide from the gas.

Examples of the Group 2 element include beryllium, magnesium, calcium, strontium, barium, and radium. Among them, the Group 2 element may be calcium, magnesium, strontium, or barium. Examples of the chloride of a Group 2 element include calcium chloride, magnesium chloride, strontium chloride, and barium chloride.

The divalent metal element is not particularly limited, and may be, for example, zinc. The chloride of a divalent metal element may be, for example, zinc chloride.

The present invention will be described below with reference to an example in which calcium chloride as the chloride of a Group 2 element (alkaline earth metal) is added in the second contact step. The present invention, however, is not limited thereto.

The method for fixing carbon dioxide of the present invention includes: a first contact step of bringing a solution containing sodium hydroxide (NaOH) into contact with a gas containing carbon dioxide (CO₂); and a second contact step of adding calcium chloride (CaCh) to the solution after the first contact step.

According to the method for fixing carbon dioxide of the present invention, carbon dioxide can be fixed by reacting sodium hydroxide and calcium chloride with carbon dioxide to produce calcium carbonate (CaCO₃). According to the present invention, for example, carbon dioxide can be fixed in a solid state. Thus, for example, carbon dioxide can be fixed in a more stable state. In addition, for example, handling is facilitated.

The first contact step may bring a solution containing sodium hydroxide into contact with a gas containing carbon dioxide. By the reaction between the sodium hydroxide and carbon dioxide in the first contact step, sodium hydrogen carbonate (NaHCO₃) or sodium carbonate (Na₂CO₃) is produced, and thus carbon dioxide can be fixed (absorbed).

In the first contact step, calcium chloride is not yet added. Therefore, according to the present invention, even when high concentration (e.g., 0.2 N or more) sodium hydroxide is used in the first contact step, for example, calcium hydroxide due to reaction with calcium chloride is not produced. Thus, in the subsequent second contact step, calcium hydroxide can be prevented from being produced due to the reaction between calcium chloride and a high concentration sodium hydroxide, and more carbon dioxide can be fixed.

The gas containing carbon dioxide is not particularly limited, and examples thereof include flue gas, indoor air, and air.

The carbon dioxide concentration in the gas containing carbon dioxide is not particularly limited, and is, for example, 0 to 100%. As will be described below, according to the present invention, even carbon dioxide at a low concentration can be fixed. Further, since a white precipitate is formed in the solution by bubbling 100% carbon dioxide, the present invention brings about an effect even in carbon dioxide fixation at a high concentration.

The temperature of the gas containing carbon dioxide is not particularly limited, and may be, for example, a low temperature of 0°C or less, a common temperature of atmospheric temperature or room temperature, a temperature of less than 100°C, or a high temperature of 120°C to 200°C. It is to be noted that the temperature of the gas may be a low temperature from the viewpoint of preventing evaporation of water. The present invention, however, can be applied even if the gas containing carbon dioxide is high in heat, for example.

The gas containing carbon dioxide may contain, for example, a substance other than carbon dioxide. The substance other than carbon dioxide is not particularly limited, and examples thereof include SOx, NOx, O₂, and dust. In addition, in the present invention, since the solution is basically alkaline, for example, it is presumed that a neutralization reaction occurs between the solution and the acidic substance and the like. The present invention, however, is not limited thereto.

In the solution containing sodium hydroxide, the concentration of the sodium hydroxide is not particularly limited, and is, for example, 0.01 N or more or 0.05 N or more. It is to be noted that the unit "N" of the concentration indicates a normality, and 0.01 N is 0.01 mol/l in the case of sodium hydroxide. When the concentration of the sodium hydroxide is 0.01 N or more or 0.05 N or more, for example, more carbon dioxide can be fixed. According to the present invention, as described above, a high concentration (e.g., 0.2 N or more) sodium hydroxide can be used. Therefore, the present invention can be applied, for example, even when the solution containing sodium hydroxide is concentrated by contact with high-temperature exhaust gas.

The temperature of the solution and the temperature of the mixed liquid after addition to be described below are not particularly limited, and are, for example, 30 to 100°C, 70°C or higher, 70°C to 80°C, or 70°C. According to the present invention, as described above, even when high concentration (e.g., 0.2 N or more) sodium hydroxide is produced, for example, due to high heat, the concentration can be decreased. Thus, the present invention can be applied even if the solution is high in heat, for example.

According to the first contact step, for example, the concentration of sodium hydroxide can be set to 0.2 N or less, less than 0.2 N, or 0.1 N or less. Thus, for example, the formation of calcium hydroxide can be suppressed in the second contact step, and more carbon dioxide can be fixed.

In the first contact step (hereinafter, simply referred to as "contact step"), the method for bringing the solution and the gas containing carbon dioxide into contact with each other is not particularly limited, and examples thereof include a method for bringing the solution and the gas into contact with each other by feeding the gas into the solution, a method for bringing the solution and the gas into contact with each other in a state where the solution is allowed to stand or a flow is generated in the solution, and a method for bringing the solution and the gas into contact with each other in a state where the solution is in a state of mist. Further, the solution and the gas may be brought into contact with each other in a state where the gas is circulated.

In the contact step, the case of bringing the solution and the gas into contact with each other by feeding the gas into the solution may be, for example, bubbling. The bubbling condition is not particularly limited, and for example, 3 ml of 0.1 N sodium hydroxide solution and 3 ml of 0.1 mol/l calcium chloride solution can be added to a 10 ml-test tube and mixed, and then bubbling can be performed in the solution using carbon dioxide (manufactured by KOIKE SANSO KOGYO CO., LTD.) for 10 seconds (about 20 cm³). It is to be noted that, the bubbling can be performed by ejecting carbon dioxide from the tip of the Pasteur pipette, for example. Further, for example, a bubbling device for aquarium organism (product name: Bukubuku, manufactured by Kotobuki Kogei Co., Ltd.) can be used. For example, a bubbling device (product name: Micro bubbler (F-1056-002) manufactured by Fron Industry Co., Ltd.) can also be used. The time for performing the bubbling may be appropriately set, for example, in a range in which the precipitate formed does not disappear by further reaction, and may be, for example, 5 to 60 seconds, 5 to 40 seconds, 5 to 30 seconds, 1 to 2 minutes, 1.5 hours, 9 hours, or 12 hours.

In the contact step, by feeding the gas into the solution, the gas can be fed into the solution as a bubble. The size (diameter) of the bubble depends on the size of the inlet through which the gas is fed, for example. When the gas is fed from a porous structure, the size of the bubble depends on the size of the pores of the porous structure, for example.

The size, number concentration, and the like of the bubbles (foam) can be appropriately set, and are not particularly limited. The size of the bubble can be, for example, of the order of centimeters, millimeters, micrometers, and nanometers. The bubble includes, for example, a fine bubble. The fine bubble is a bubble having a sphere equivalent diameter of 100 µm or less. The fine bubbles include microbubbles having a diameter of 1 to 100 µm and ultrafine bubbles (also referred to as nanobubbles) having a diameter of 1 µm or less. By setting the bubble to a small size such as a fine bubble, for example, the surface area of the bubble can be made larger, and the reaction in the contact step can be promoted. By setting the bubble to a size larger than that of the fine bubble, for example, the gas pressure required for the feeding of the gas can be reduced.

The size of the bubble can be measured, for example, by a general method. Specifically, for example, the size of the bubble can be measured by taking a photograph of the bubble with a predetermined scale, and comparing the size of the bubble in the photograph with the scale. Furthermore, particle size distribution measurement techniques such as laser diffraction and scattering methods, dynamic light scattering methods, particle trajectory analysis methods, resonant mass measurement methods, electrical detection band methods, dynamic image analysis methods, and light shielding methods can be utilized.

In the contact step, when the solution is brought into contact with the gas in a state where the solution is allowed to stand, the contact condition is not particularly limited. For example, the inside of a 2 1-PET bottle (commercially available one) having a common shape is brought into equilibrium with air, and then 10 ml of the solution is added to the PET bottle, thereby allowing the PET bottle to stand with its bottom facing down. The contact time may be, for example, 15 minutes, 30 minutes, 60 minutes, or overnight after the contact.

In the contact step, regarding "bringing the solution into contact with the gas in a state where a flow is generated in the solution ", for example, the solution may be brought into contact with the gas in a state where the solution is shaken, the solution may be brought into contact with the gas by flowing the solution through a vessel, or the mixed liquid may be brought into contact with the gas by adding the solution (for example, by showering or spraying) from an upper part (such as a ceiling) of the vessel or the like to the space in the vessel.

In the contact step, when the solution is brought into contact with the gas in a state where the solution is shaken, the shaking condition is not particularly limited. For example, an octagonal prismatic plastic bottle (commercially available one) containing 10 ml of the solution can be shaken using a shaker (BR-21UM, manufactured by TAITEK) at 120 rpm. Furthermore, for example, a 21-vessel containing 50 ml of the solution can be vigorously shaken by an adult male hand 1 to 4 times with a shaking of 30 seconds as a single shake. The 1 to 4 shakes may be performed, for example, immediately after, 30 seconds after, 2 minutes after, 5 minutes after, or 4 hours after the contact.

In the contact step, when the solution is brought into contact with the gas in a state where the solution is in a state of mist, the contact condition is not particularly limited. For example, about 4 ml of the solution can be sprayed into a 21-vessel containing the gas 10 times at 5 second intervals using a sprayer (commercially available one). The solution in a state of mist may be added, for example, by showering or spraying from the upper part of the vessel to the space in the vessel.

In the contact step, a contact unit that brings the solution into contact with the gas containing carbon dioxide is not particularly limited, and reference can be made to the description as to the fixed carbon dioxide production apparatus to be described below.

The second contact step adds calcium chloride to the solution after the first contact step. By reacting hydrogen carbonate or sodium carbonate produced by the first contact step with calcium chloride by the second contact step, calcium carbonate is produced, and carbon dioxide can be fixed.

In the second contact step, contact with the gas containing carbon dioxide may be terminated. Further, the second contact step may be performed while contacting with the gas containing carbon dioxide.

In the second contact step, the concentration of the calcium chloride in the mixed liquid after addition is not particularly limited, and is, for example, 0.005 mol/l or more or 0.05 mol/l or more, and 0.5 mol/l or less, less than 0.5 mol/l, or 0.1 mol/l or less. When the concentration of the calcium chloride is within the above range, for example, more carbon dioxide can be fixed.

In the second contact step, the pH of the mixed liquid after addition is not particularly limited, and for example, the pH of the mixed liquid containing 0.05 N sodium hydroxide and 0.05 mol/l calcium chloride is about 12.

The method for fixing carbon dioxide of the present invention may further include a dilution step, wherein the dilution step may dilute the solution after the first contact step, for example. The method for diluting is not particularly limited, and for example, distilled water may be added. The proportion of the dilution can be appropriately set, and can be diluted to, for example, 1/10. By the dilution step, for example, the concentration of sodium hydroxide can be decreased to 0.2 N or less, less than 0.2 N, or 0.1 N or less.

The method for fixing carbon dioxide of the present invention may further include a cooling step, wherein the cooling step may cool the mixed liquid after addition after the second contact step, for example. In the cooling step, for example, the mixed liquid at 70 °C or higher can be cooled.

### (Method for producing fixed carbon dioxide)

The method for producing fixed carbon dioxide of the present invention includes a fixation step of fixing carbon dioxide, wherein the fixation step is carried out by the method for fixing carbon dioxide of the present invention as described above. The method for producing fixed carbon dioxide of the present invention is characterized in that it includes the fixation step, and other steps and conditions are not particularly limited. The method for fixing carbon dioxide of the present invention is as described above. The conditions and the like of the fixation step are not particularly limited, and are the same as those described in the method for fixing carbon dioxide of the present invention, for example.

### (Fixed Carbon Dioxide Production Apparatus)

The fixed carbon dioxide production apparatus of the present invention includes: a contact unit that brings a solution containing sodium hydroxide into contact with a gas containing carbon dioxide; and an adding unit that adds at least one of a chloride of a Group 2 element or a chloride of a divalent metal element to the solution. The solution and the gas containing carbon dioxide are, for example, the same as described in the method for fixing carbon dioxide of the present invention.

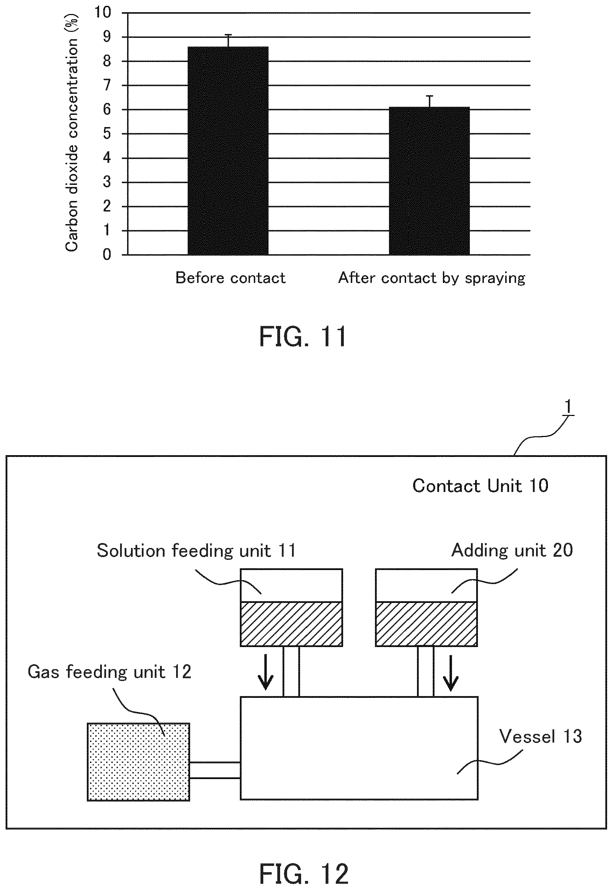

The contact unit is not particularly limited as long as it can bring a solution containing sodium hydroxide into contact with a gas containing carbon dioxide. FIG. 12 is a schematic diagram showing an example of the contact unit. As shown in FIG. 12, a fixed carbon dioxide production apparatus 1 includes a contact unit 10, and the contact unit 10 includes a solution feeding unit 11 that feeds the solution, a gas feeding unit 12 that feeds the gas containing carbon dioxide, and a vessel 13 in which the solution and the gas containing carbon dioxide are brought into contact with each other, for example. The vessel 13 can contain the solution. Further, the fixed carbon dioxide production apparatus 1 includes an adding unit 20, and the adding unit 20 further adds calcium chloride to the solution, for example.

The contact unit 10 may be, for example, a unit that brings the solution and the gas into contact with each other in a state where the solution is allowed to stand or a flow is generated in the solution. Regarding "bringing the solution and the gas into contact with each other in a state where a flow is generated in the solution", for example, the solution and the gas may be brought into contact with each other in a state where the solution is shaken as described above, or the solution and the gas may be brought into contact with each other by flowing the solution through a vessel. When flowing the solution, the solution may be flowed in one direction or may be circulated.

The contact unit 10 may be, for example, a unit that brings the solution and the gas into contact with each other in a state where the solution is in a state of mist.

The contact unit 10 may be, for example, a unit that brings the solution and the gas into contact with each other in a state where the gas is circulated.

The contact unit 10 may be, for example, a closed system or an open system that allows the gas or the like to move to the outside.

The solution feeding unit 11 is not particularly limited as long as it can feed the solution, and may be, for example, a sprayer.

The gas feeding unit 12 can feed the gas into the solution, for example. The feeding of the gas is, for example, as described above.

The gas feeding unit 12 is not particularly limited as long as it can feed the gas containing carbon dioxide, and examples thereof include an air stone, a hose (tube), and a Pasteur pipette. The air stone has, for example, a porous structure, and the gas can be fed from micropores of the air stone. The size, shape, and material of the gas feeding unit are not particularly limited. For example, the material of the air stone may be ceramic or the like, and the material of the hose (tube) may be silicon or the like. The surface area of the air stone is, for example, 21 cm² per air stone when it is in the shape of sphere. Specifically, the gas feeding unit 12 may be the aforementioned bubbling device or the like.

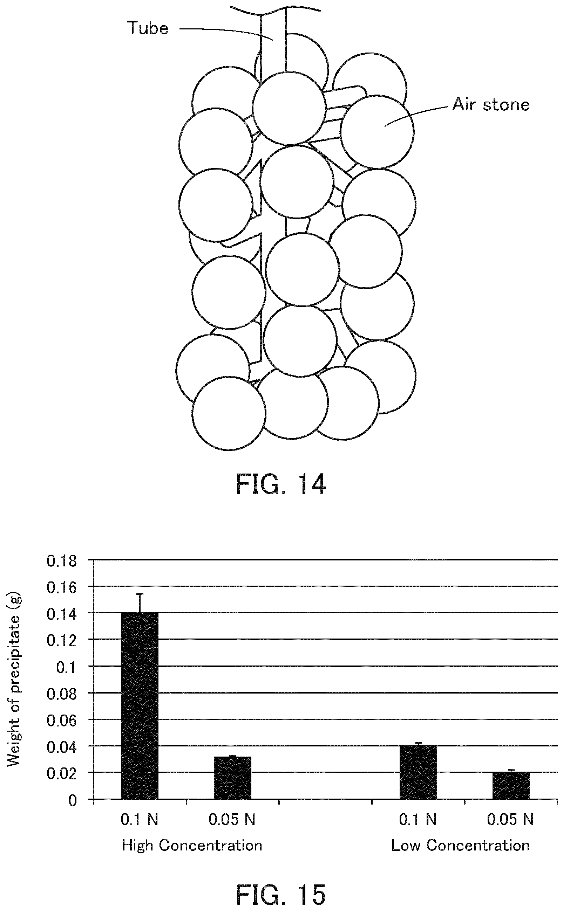

The gas feeding unit 12 may include a plurality of air stones, for example. Specifically, for example, as shown in FIG. 14, a tube for feeding the gas and a plurality of air stones may be arranged in the shape of a bunch of grapes. The "bunch of grapes" may be a structure in which one tubes is branched, and the air stones are connected to the ends of the branched tubes as shown in FIG. 14, or a structure in which a plurality of the tubes are bundled and the air stones are connected to the ends of the respective tubes. Also, for example, a plurality of the air stones (e.g., in the shape of a sphere, a cylinder, or the like) may be filled into vessel. When the solution and the gas are brought into contact with each other by feeding the gas into the solution using the feeding unit as described above, the surface area of the gas to be in contact with the solution becomes large, which is preferable.

The vessel 13 is not particularly limited as long as the solution and a gas containing carbon dioxide can be brought into contact with each other therein. The size of the vessel 13 can be appropriately set, for example, according to the amount of the gas containing carbon dioxide. Examples of the material of the vessel 13 include plastic, glass, and ceramic.

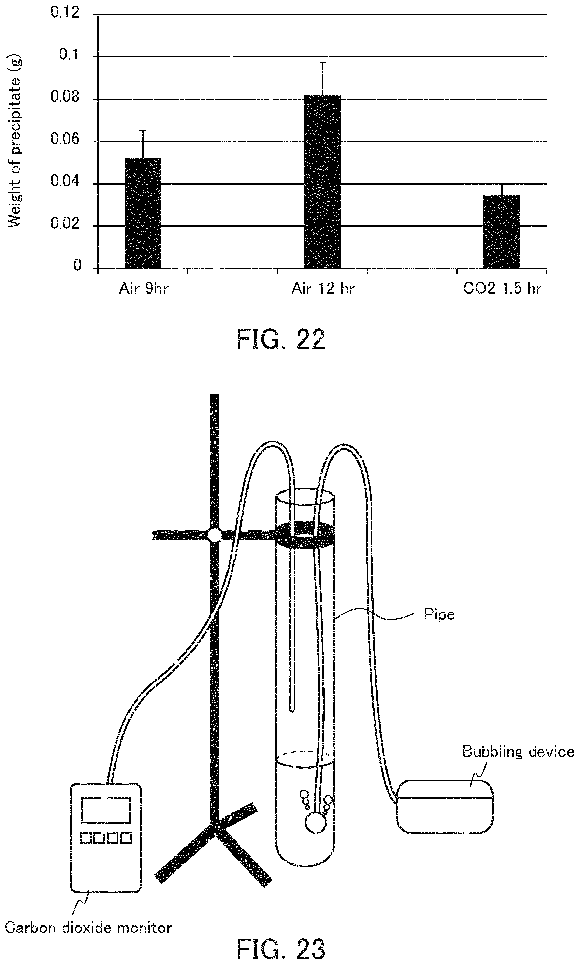

The shape of the vessel 13 can be appropriately set, for example, according to the mode of contact between the solution and the gas containing carbon dioxide. Specifically, for example, as described above, when the solution and the gas are brought into contact with each other by feeding the gas into the solution, the shape of the vessel 13 may be a cylindrical shape such as a circular cylindrical shape. Thereby, for example, by installing the vessel 13 in such a manner that the long axis direction of the cylindrical shape is in the gravitational direction and feeding the gas from the lower part of the vessel 13, the gas can be moved toward the upper part of vessel 13, so that the contact time in the contact step becomes longer, which is preferable. The vessel 13 may be, for example, a pipe shown in FIG. 23.

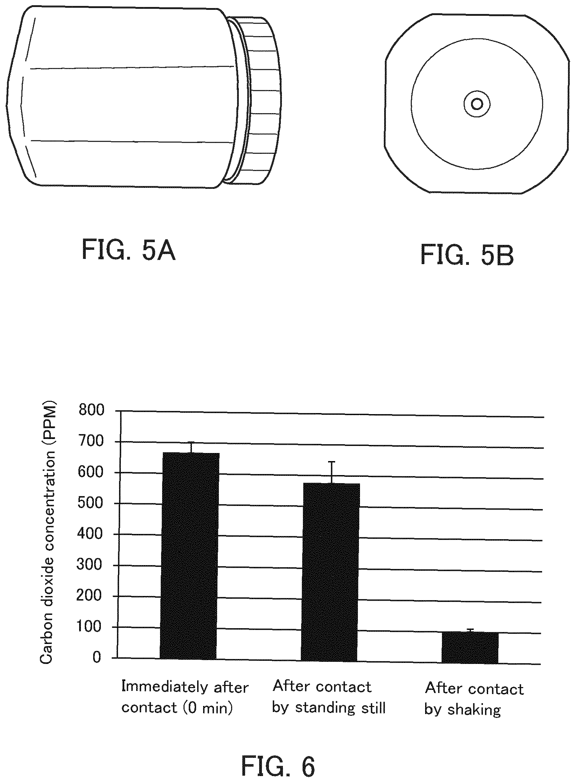

For example, as described above, when the solution and the gas are brought into contact with each other in a state where the solution is shaken, the vessel 13 preferably has a polygonal cross-section at a bottom surface. The polygonal shape is, for example, a non-regular polygonal shape. The polygonal shape is, for example, an octagonal shape. Specific examples of the shape of the vessel 13 include a polygonal prism shape and an octagonal prism shape as shown in FIG. 5. Since the vessel 13 has a polygonal cross-section at a bottom surface, more carbon dioxide can be fixed as described below. This is considered to be because, for example, in the shaking, the surface area of the solution increases, so that the solution can be brought into contact with more gas containing carbon dioxide. The present invention, however, is not limited thereto.

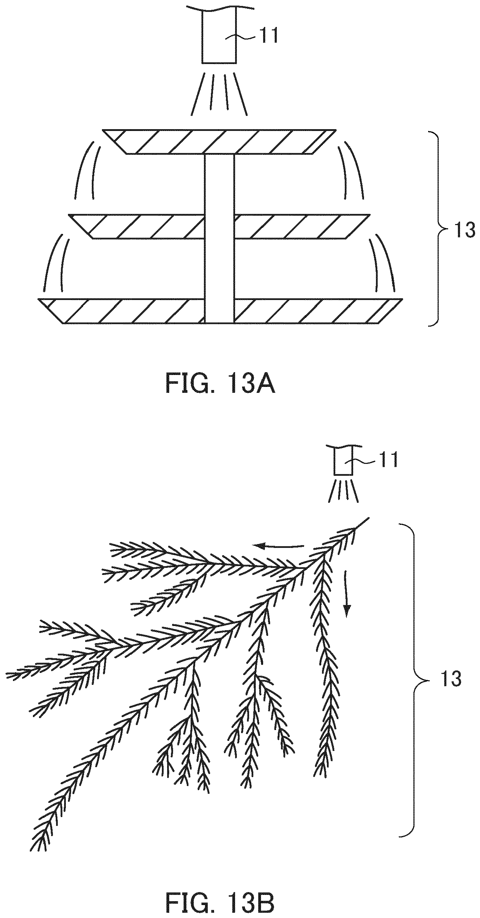

Further, for example, as described above, when the solution and the gas are brought into contact with each other in a state where the solution is allowed to stand or a flow is generated in the solution in the vessel 13, the vessel 13 may include a plurality of secondary vessels. Then, for example, the solution may be allowed to come into contact with the gas by sequentially flowing through the plurality of secondary vessels. For example, as shown in FIG. 13A, the secondary vessel may have a basin-like structure with a shallow water depth. The plurality of secondary vessels may have, for example, a structure in which they are overlapped with each other with a space therebetween in the vertical direction. Thus, for example, the solution can flow sequentially from the secondary vessel on the upper side to the secondary vessel on the lower side.

Further, for example, as described above, when the solution and the gas are brought into contact with each other in a state where the solution is allowed to stand or a flow is generated in the solution, the vessel 13 may have a network structure, for example. Then, for example, the solution may be allowed to come into contact with the gas by flowing through the network structure. Examples of the network structure include a mesh-like structure and a branched structure such as a structure of cedar leaves as shown in FIG. 13B. The size, fineness, and the like of the network structure can be appropriately set. The network structure can be formed, for example, as an aggregate of a plurality of plate-like, granular, or rod-like structures. The material for forming the network structure is not particularly limited, and may be, for example, plastic.

The fixed carbon dioxide production apparatus 1 may further include a cooling unit that may cool the solution after reaction with the gas, for example.

### Examples

Hereinafter, the present invention will be described with reference to examples and reference examples. It is to be noted, however, that the present invention is not restricted by the following examples and reference examples. Commercially available reagents were used based on their protocols unless otherwise mentioned.

### Example 1

It was examined that carbon dioxide can be fixed by a first contact step of bringing a solution containing sodium hydroxide (NaOH) into contact with a gas containing carbon dioxide (CO₂) and a second contact step of adding calcium chloride (CaCh) to the solution after the first contact step.

As a solution containing sodium hydroxide, a 1 N sodium hydroxide solution (manufactured by Wako Pure Chemical Industries, Ltd.) was used. Further, a 1 mol/l calcium chloride solution (manufactured by Wako Pure Chemical Industries, Ltd.) was diluted with distilled water to prepare a 0.1 mol/l calcium chloride solution.

5 ml of the 1 N sodium hydroxide solution was fed into a 10 ml-test tube, and, by bubbling carbon dioxide (CO₂ 100%, manufactured by KOIKE SANSO KOGYO CO., LTD.), the carbon dioxide was brought into contact with the solution (first contact step). The bubbling was performed by ejecting carbon dioxide from the tip of a Pasteur pipette. The bubbling condition was 2 cm³/sec for 40 seconds. The sizes of the bubbles in the bubbling were visually measured by comparison with a scale and were on the order of millimeters to centimeters.

Next, the solution after the first contact was diluted with distilled water so as to have predetermined concentrations (0.1 N and 0.05 N). 3 ml of the diluted solution was fed into a 10 ml-test tube, and 3 ml of the 0.1 mol/l calcium chloride solution was added to the solution (second contact step). After the contact, the mixed liquid after addition was centrifuged at 3000 rpm for 10 minutes. Then, before and after the contact, the weight of the test tube was measured, and the difference in the weight before and after the contact was calculated as the precipitation amount.

Then, in order to examine the concentration effect of sodium hydroxide on the absorption of carbon dioxide, the following experiment was conducted. The 1 N sodium hydroxide solution was diluted with distilled water so as to have predetermined concentrations (0.1 N and 0.05 N). 3 ml of sodium hydroxide solution having the predetermined concentration was fed into a 10 ml-test tube, and by bubbling carbon dioxide, the carbon dioxide was brought into contact with the solution (first contact step). The bubbling condition was 2 cm³/sec for 20 seconds. Then, 3 ml of the 0.1 mol/l calcium chloride solution was added to the solution (second contact step). After the addition, the precipitation amount was calculated in the same manner as described above.

The results are shown in FIG. 15. FIG. 15 is a graph showing the weight of the precipitate produced in the mixed liquid due to contact with the carbon dioxide. In FIG. 15, the vertical axis indicates the weight (g) of the precipitate per test tube and the horizontal axis indicates the experimental conditions. The left-hand graph shows the result of the first step using a 1 N sodium hydroxide solution ("High Concentration"), and the right-hand graph shows the result of the first step using the diluted sodium hydroxide solution ("Low Concentration"). It is to be noted that each value of the weight of the precipitate was an average value of measured values of 4 samples. As shown in FIG. 15, as a result of performing the first contact step and the second contact step, the precipitate was produced at either concentration in the first contact step. Furthermore, as the concentration in the first contact step increased, the larger the amount of the precipitate was produced.

Furthermore, it was verified that the sodium hydrogen carbonate (NaHCO₃) and sodium carbonate (Na₂CO₃) produced in the first step were reacted with calcium chloride in the second step to produce the precipitate.

A 0.5 mol/l calcium chloride solution was prepared in the same manner as described above. 1 ml of a 1 N hydrogen carbonate solution (manufactured by Wako Pure Chemical Industries, Ltd.), 1 ml of distilled water, and 2 ml of the 0.5 mol/l calcium chloride solution were fed into a 10 ml-test tube and mixed using a vortex mixer. Thereafter, the precipitation amount of the produced precipitate was calculated in the same manner as described above.

Then, 2 ml of a 0.5 mol/l sodium carbonate solution (manufactured by Wako Pure Chemical Industries, Ltd.) and 2 ml of the 0.5 mol/l calcium chloride solution were mixed, and the precipitation amount of the produced precipitate was calculated in the same manner as described above.

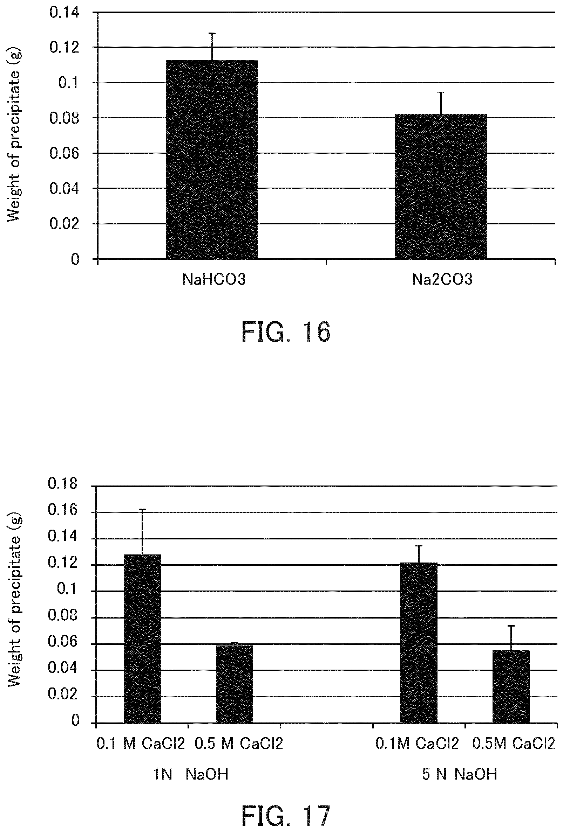

The results are shown in FIG. 16. FIG. 16 is a graph showing the weight of the precipitate produced in the mixed liquid due to contact with the carbon dioxide. In FIG. 16, the vertical axis indicates the weight (g) of the precipitate per test tube and the horizontal axis indicates the experimental conditions. It is to be noted that each value of the weight of the precipitate was an average value of measured values of a total of 4 samples. As shown in FIG. 16, each of the hydrogen carbonate solution and the sodium carbonate solution produced a precipitate by reaction with the calcium chloride solution.

As described above, it was verified that carbon dioxide can be fixed by the first contact step of bringing a solution containing sodium hydroxide into contact with a gas containing carbon dioxide and the second contact step of adding calcium chloride to the solution and further bringing the mixed liquid after addition into contact with the gas containing carbon dioxide after the first contact step. Further, it was verified that the hydrogen carbonate and sodium carbonate produced in the first step were reacted with calcium chloride in the second step, resulting in precipitation.

### Example 2

It was examined that carbon dioxide can be fixed even if the concentrations of the sodium hydroxide solution and the calcium chloride solution were changed.

In the same manner as in Example 1, a 1 N sodium hydroxide solution was used. Further, as the solution containing sodium hydroxide, a 5 N sodium hydroxide solution (manufactured by Wako Pure Chemical Industries, Ltd.) was used. In addition, in the same manner as in Example 1, the calcium chloride solutions having concentrations of 0.1 mol/l and 0.5 mol/l were prepared.

The first contact step and the second contact step were carried out in the same manner as in Example 1 using the sodium hydroxide solutions having concentrations of 1 N and 5 N and the calcium chloride solutions having concentrations of 0.1 mol/l and 0.5 mol/1. Provided that, only when the 5 N sodium hydroxide solution was used, the bubbling time in the first contact step was set to 50 seconds instead of 20 seconds. Then, in the same manner as in Example 1, the precipitation amount was calculated.

The results are shown in FIG. 17. FIG. 17 is a graph showing the weight of the precipitate produced in the mixed liquid due to contact with the carbon dioxide. In FIG. 17, the vertical axis indicates the weight (g) of the precipitate per test tube and the horizontal axis indicates experimental conditions. The left-hand graph shows the result of the first step using the 1 N sodium hydroxide solution and the right-hand graph shows the result of the first step using the 5 N sodium hydroxide solution. In each graph, the left bar shows the result obtained by using the 0.1 mol/l calcium chloride solution and the right bar shows the result obtained by using the 0.5 mol/l calcium chloride solution. It is to be noted that each value of the weight of the precipitate was an average value of measured values of a total of 5 samples. As shown in FIG. 17, the precipitate was produced at either concentration of the sodium hydroxide solution and the calcium chloride solution. As a result of setting the concentration of the sodium hydroxide solution to 1 N and 5 N, almost the same value was obtained between them. As a result of setting the concentration of the calcium chloride solution to 0.1 mol/l and 0.5 mol/l, the precipitation amount was about a half value at either concentration of the sodium hydroxide solution with the 0.5 mol/l calcium chloride solution as compared to the case with the 0.1 mol/l calcium chloride solution. It was examined that more carbon dioxide could be fixed by using the 0.1 mol/l calcium chloride solution.

As described above, it was verified that carbon dioxide can be fixed even if the concentrations of the sodium hydroxide solution and the calcium chloride solution were changed.

### Example 3

It was examined that carbon dioxide can be fixed even if the contact time with a gas containing carbon dioxide in the first contact step was changed. In addition, a mixed liquid containing sodium hydroxide and calcium chloride was brought into contact with a gas containing carbon dioxide without performing the first contact step and the second contact step, and the results were compared.

A 1 N sodium hydroxide solution was used in the same manner as in Example 1. Further, the 0.1 mol/l calcium chloride solution was prepared.

The first contact step was performed in the same manner as in Example 1 except that the bubbling condition was 5, 10, 20, 30, or 60 seconds.

Next, 9 ml of distilled water was added to the solution after the first contact to dilute so as to achieve the concentration of about 0.1 N (approximate value based on the initial concentration). 3 ml of the diluted solution was fed into a 10 ml-test tube and 3 ml of the 0.1 mol/l calcium chloride solution was added to the solution (second contact step). After the contact, the mixed liquid was centrifuged in the same manner as in Example 1. Then, in the same manner as in Example 1, the precipitation amount was calculated.

As a comparative example, the following experiment was conducted. The 1 N sodium hydroxide solution was diluted with distilled water so as to achieve the concentration of 0.1 N. 3 ml of the 0.1 N sodium hydroxide solution and 3 ml of the 0.1 N calcium chloride solution were fed into a 10 ml-test tube and mixed, and, by bubbling carbon dioxide, the carbon dioxide was brought into contact with the mixed liquid in the same manner as described above. After the addition, the precipitation amount was calculated in the same manner as described above.

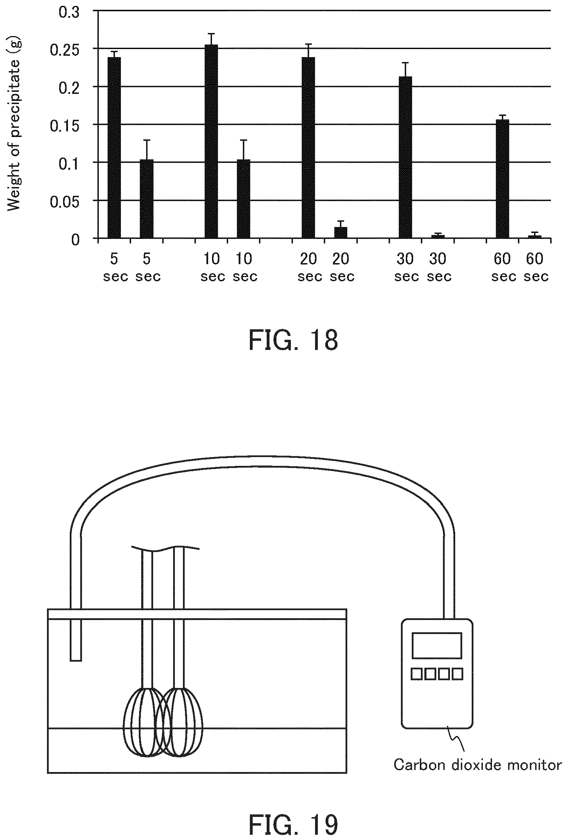

The results are shown in FIG. 18. FIG. 18 is a graph showing the weight of the precipitate produced in the mixed liquid due to contact with the carbon dioxide. In FIG. 18, the vertical axis indicates the weight (g) of the precipitate per test tube and the horizontal axis indicates the bubbling time. In each bubbling time, the left bar shows the result obtained by performing the first contact step and the second contact step and the right bar shows the result of the comparative example. It is to be noted that each value of the weight of the precipitate was an average value of a total of 3 measurements. As shown in FIG. 18, as a result of performing the first contact step and the second contact step, the precipitate was produced at either bubbling time. Approximately the same precipitation amount was obtained in the bubbling for 5 to 30 seconds. Even when bubbling was performed for 60 seconds, a sufficient precipitation amount was obtained, although it was slightly decreased. In the case of the comparative example, while the precipitate was produced in the bubbling for 5 to 10 seconds, the precipitation amount was less than or equal to half of the result of performing the first contact step and the second contact step. Moreover, the precipitation amount was greatly decreased when bubbling was performed for more than 20 seconds.

As described above, it was verified that carbon dioxide can be fixed even if the contact time with the gas containing carbon dioxide in the first contact step is changed. Furthermore, it was found that, when the first contact step and the second contact step are performed, carbon dioxide can be more efficiently fixed as compared to a case where a mixed liquid containing sodium hydroxide and calcium chloride is brought into contact with a gas containing carbon dioxide without performing the first contact step and the second contact step.

### Reference Example 1

It was examined that carbon dioxide can be fixed by bringing a mixed liquid containing sodium hydroxide (NaOH) and calcium chloride (CaCh) into contact with a gas containing carbon dioxide (CO₂) by bubbling the gas into the mixed liquid in the vessel.

A 1 N sodium hydroxide solution (manufactured by Wako Pure Chemical Industries, Ltd.) was diluted with distilled water so as to have concentrations of 0.01, 0.02, 0.1, 0.2, and 0.4 N to prepare sodium hydroxide solutions having the respective concentrations. Further, a 1 mol/l calcium chloride solution (manufactured by Wako Pure Chemical Industries, Ltd.) was diluted with distilled water so as to have concentrations of 0.01, 0.02, 0.1, 0.2, and 1 (undiluted) mol/l to prepare calcium chloride solutions having the respective concentrations.

3 ml of each of the sodium hydroxide solutions of the respective concentrations and 3 ml of the 0.1mol/l calcium chloride solution were added to a 10 ml-test tube and mixed. Then, by bubbling carbon dioxide (CO₂ 100%, manufactured by KOIKE SANSO KOGYO CO., LTD.), the carbon dioxide was brought into contact with the mixed liquid. The bubbling was performed by ejecting carbon dioxide from the tip of a Pasteur pipette. The bubbling condition was 10 seconds (about 20 cm³). After the contact, the mixed liquid was centrifuged at 3000 rpm for 10 minutes. Then, before and after the contact, the weight of the test tube was measured, and the difference in the weight between before and after the contact was calculated as the precipitation amount. It is to be noted that, as will be described below, when the precipitate is produced before contact with the carbon dioxide, the contact was carried out after removing the precipitate.

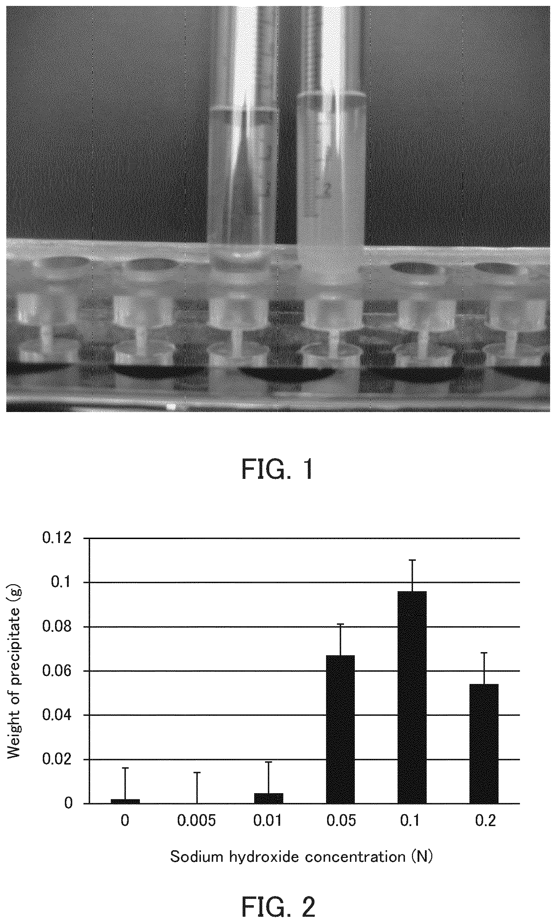

The results are shown in FIGs. 1 and 2. FIG. 1 is a photograph of mixed liquids containing 0.05 N sodium hydroxide and 0.05 mol/l calcium chloride before and after the contact with the carbon dioxide. In FIG.1, the left test tube contains the mixed liquid before the contact and the right test tube contains the mixed liquid after the contact. As shown in FIG. 1, by bringing the mixed liquid into contact with the carbon dioxide, a white precipitate of calcium carbonate (CaCO₃) was produced in the mixed liquid. It is to be noted that, in the mixed liquid, a white turbidity was observed before the completion of bubbling for 10 seconds.

FIG. 2 is a graph showing the weight of the precipitate produced in the mixed liquid due to contact with the carbon dioxide. In FIG. 2, the vertical axis indicates the weight (g) of the precipitate per test tube, and the horizontal axis indicates the sodium hydroxide concentration (N) in the mixed liquid. It is to be noted that each value of the weight of the precipitate was an average value of measured values of a total of 5 samples of the mixed liquid. As shown in FIG. 2, as a result of bringing the mixed liquid into contact with the carbon dioxide, the precipitate was produced in the mixed liquid having the sodium hydroxide concentration of 0.01 N or more. The amount of the precipitate was greatly increased at the concentration of 0.05 N, and the amount of the precipitate was maximum at the concentration of 0.1 N. On the other hand, the amount of the precipitate was decreased at the concentration of 0.2 N as compared to the value at the concentration of 0.1 N. It was verified that more carbon dioxide could be fixed at the concentrations of 0.05 N to 0.2 N, and at the concentrations 0.05 N to 0.1 N.

It is to be noted that, when the sodium hydroxide concentration was 0.2 N, a white precipitate was formed in the mixed liquid before the contact with carbon dioxide. This white precipitate is considered to be calcium hydroxide (Ca(OH)₂) produced by the reaction between calcium chloride and high concentration sodium hydroxide. Therefore, as a reason why the precipitation amount was decreased at the concentration of 0.2 N, it is considered that calcium hydroxide was produced by the reaction between calcium chloride and high concentration sodium hydroxide, so that the synthesis amount of calcium carbonate due to the contact was decreased.

Next, the contact was carried out in the same manner as described above except that 3 ml of the 0.1 N sodium hydroxide solution and 3 ml of each of the calcium chloride solutions having respective concentrations were added and mixed to prepare the mixed liquid.

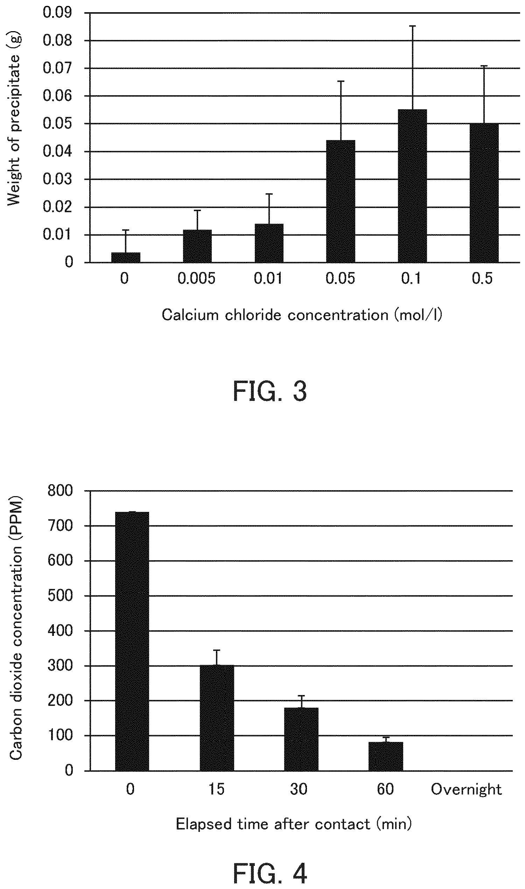

The results are shown in FIG. 3. FIG. 3 is a graph showing the weight of the precipitate produced in the mixed liquid due to contact with the carbon dioxide. In FIG. 3, the vertical axis indicates the weight (g) of the precipitate per test tube, and the horizontal axis indicates the calcium chloride concentration (mol/1) in the mixed liquid. It is to be noted that each value of the weight of the precipitate was an average value of measured values of a total of 5 samples of the mixed liquid. As shown in FIG. 3, the precipitate was produced at all calcium chloride concentrations as a result of bringing the mixed liquid into contact with carbon dioxide. The amount of the precipitate was greatly increased at the concentration of 0.05 mol/1, and the amount of the precipitate was maximum at the concentration of 0.1 mol/1. It was verified that more carbon dioxide could be fixed when the calcium chloride concentration was 0.05 mol/l to 0.5 mol/l.

It is to be noted that, when the calcium chloride concentration was 0.2 mol/l to 0.5 mol/1, formation of a white precipitate was observed in the mixed liquid before the contact with carbon dioxide. Then, this white precipitate was disappeared by adding carbon dioxide during the contact. On the other hand, when the calcium chloride concentration was 0.1 mol/l and 0.05 mol/1, a precipitate was formed in the mixed liquid, and even if the contact was carried out, the precipitate was not disappeared.

As described above, it was verified that carbon dioxide can be fixed by bringing a mixed liquid containing sodium hydroxide and calcium chloride into contact with a gas containing carbon dioxide by bubbling the gas into the mixed liquid in the vessel.

### Reference Example 2

It was examined that carbon dioxide can be fixed by bringing a mixed liquid containing sodium hydroxide and calcium chloride into contact with a gas containing carbon dioxide in a state where the mixed liquid is allowed to stand or shaken in a vessel.

An equal amount of the 0.1 N sodium hydroxide solution and the 0.1 mol/l calcium chloride solution were mixed to prepare a mixed liquid. A 2 1-PET bottle (commercially available one) having a common shape was brought into equilibrium with air, and then 10 ml of the mixed liquid was added to the PET bottle. The PET bottle was allowed to stand with its bottom facing down, and the mixed liquid was brought into contact with carbon dioxide. The carbon dioxide concentration in the PET bottle was measured using a carbon dioxide monitor (manufactured by RI-85, manufactured by RIKEN KEIKI Co., Ltd.) at 0 minutes after (immediately after the contact), 15 minutes after, 30 minutes after, 60 minutes after, and overnight after the contact.

The results are shown in FIG. 4. FIG. 4 is a graph showing the carbon dioxide concentration in the PET bottle after the contact. In FIG. 4, the vertical axis indicates the carbon dioxide concentration (PPM) and the horizontal axis indicates the elapsed time after the contact (minutes). It is to be noted that each value of the carbon dioxide concentration was an average value of measured values of a total of 4 samples at 0 minutes after (immediately after the contact), 15 minutes after, 30 minutes after, and 60 minutes after the contact. It is to be noted that, the measured values of a total of 6 samples after overnight contacting were all 0 PPM. As shown in FIG. 4, due to the contact, the carbon dioxide concentration in the PET bottle was decreased according to the elapsed time after the contact. Further, since the value of the carbon dioxide concentration became 0 PPM after overnight contacting, it was found that even a low concentration carbon dioxide can be fixed according to the present invention.

Next, the contact was carried out for 5 minutes in the same manner as described above except that an octagonal prism plastic bottle of the shape shown in FIG. 5 was used instead of the PET bottle, and the octagonal prism plastic bottle was allowed to stand in a state of being overturned with its side facing down or the octagonal prism plastic bottle was shaken in a state of being overturned with its side facing down. FIG. 5A is a view of the octagonal prism plastic bottle as viewed from the lateral direction and FIG. 5B is a view of the octagonal prism plastic bottle as viewed from the bottom. The shaking was performed using a shaker (BR-21UM, manufactured by TAITEK Corporation) at 120 rpm.

The results are shown in FIG. 6. FIG. 6 is a graph showing the carbon dioxide concentration in the octagonal prism plastic bottle after the contact. In FIG. 6, the vertical axis indicates the carbon dioxide concentration (PPM), and the horizontal axis indicates, from the left, immediately after the contact (0 min), after contact by the standing, and after contact by the shaking. It is to be noted that each value of the carbon dioxide concentration was an average value of measurement values of a total of 4 samples. As shown in FIG. 6, the carbon dioxide concentration in the octagonal prism plastic bottle was decreased due to the contact by the shaking as compared to that immediately after the contact. Specifically, the carbon dioxide concentration in the octagonal prism plastic bottle was greatly decreased to about 1/6 due to the contact by the shaking as compared to that immediately after the contact, which showed that more carbon dioxide can be fixed due to the contact by the shaking.

As described above, the carbon dioxide concentration was greatly decreased due to the contact by the shaking as compared to that by the contact in a state of standing still. It is considered that the reason for this is that, due to the shaking, the surface area of the mixed liquid increases, so that the mixed liquid can be brought into contact with more gas containing the carbon dioxide. Further, it is considered that, since the octagonal prism plastic bottle has more planar bottom and short dimension as compared to a PET bottle of a common shape, the surface area of the mixed liquid is further increased.

Next, the contact was carried out under a different shaking condition. Instead of the octagonal prism plastic bottle, the 2 1-PET bottle having a common shape was used. Twelve hours before the contact, the cap of the PET bottle was opened, a tip of the Pasteur pipet was inserted into the mouth of the PET bottle, and carbon dioxide was fed from the tip. Then, 50 ml of the mixed liquid was fed into the PET bottle, and then vigorously shaken by an adult male hand 1 to 6 times with a shaking of 30 seconds as a single shake. The first contact by the shaking was performed immediately after the contact, and the second to sixth contacts by the shaking were performed 2 minutes after, 5 minutes after, 15 minutes after, 30 minutes after, and 60 minutes after the completion of the contact, respectively. Then, after the first to sixth contacts, the carbon dioxide concentration was measured using a carbon dioxide detector (XP-3140, manufactured by COSMO).

Further, after the sixth contact, 50 ml of the mixed liquid was further added and shaken vigorously for 30 seconds, and then the carbon dioxide concentration was measured. Thereafter, the carbon dioxide concentration was further measured after being stand still for 24 hours. Further, after being stand still for 24 hours, 50 ml of the mixed liquid was further added, the mixed liquid was shaken vigorously for 30 seconds, and then the carbon dioxide concentration was measured.

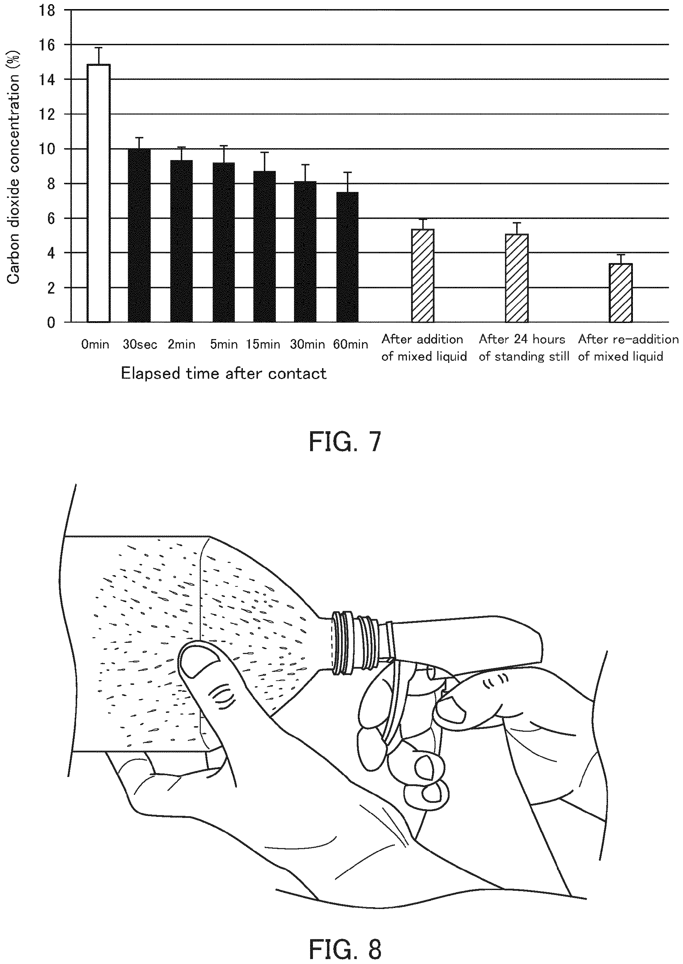

The results are shown in FIG. 7. FIG. 7 is a graph showing the carbon dioxide concentration in the PET bottle after the contact. In FIG. 7, the vertical axis indicates the carbon dioxide concentration (%), the horizontal axis indicates, from the left, immediately after the contact (0 minutes), after the contact by the first shaking (30 seconds), after the contact by the second shaking (2 minutes), after the contact by the third shaking (5 minutes), after the contact by the fourth shaking (15 minutes), after the contact by the fifth shaking (30 minutes), after the contact by the sixth shaking (60 minutes), after addition of the mixed liquid, after 24 hours of standing still, and after re-addition of the mixed liquid. It is to be noted that each value of the carbon dioxide concentration was an average value of measured values of a total of 5 samples. As shown in FIG. 7, the carbon dioxide concentration was greatly decreased after the first contact (30 seconds) as compared to that immediately after the contact (0 minutes). The carbon dioxide concentration was decreased slowly after the second to sixth contacts. On the other hand, the addition of the mixed liquid caused a sharp further decrease in carbon dioxide concentration. A remarkable decrease in the carbon dioxide concentration was also observed in the re-addition of the mixed liquid. Thus, it was verified that, the carbon dioxide concentration was decreased even in a state of a high carbon dioxide concentration, by adding the mixed liquid again.

Further, the contact was carried out under a different shaking condition. Instead of the PET bottle, a 1.85 1-plastic box (commercially available one) shown in FIG. 19 was used. In FIG. 19, the inside of the plastic box is shown in a perspective manner. The contact was carried out by feeding 500 ml of the 0.1 N sodium hydroxide solution and 500 ml of the 0.1 mol/l calcium chloride solution in the plastic box, followed by full rotations (number 3: "whisk-whisk egg whites finely" mode) using a hand mixer (HM-20, 60W, manufactured by TOSHIBA CORPORATION). Then, the carbon dioxide concentration in the plastic box was measured using the carbon dioxide monitor. About 2 minutes after the start of the contact, it was confirmed that the carbon dioxide concentration became almost constant, and the contact was terminated. The measured value of the carbon dioxide concentration at the termination of the contact was acquired. Also, as a control, the carbon dioxide concentration of air outside the plastic box was measured.

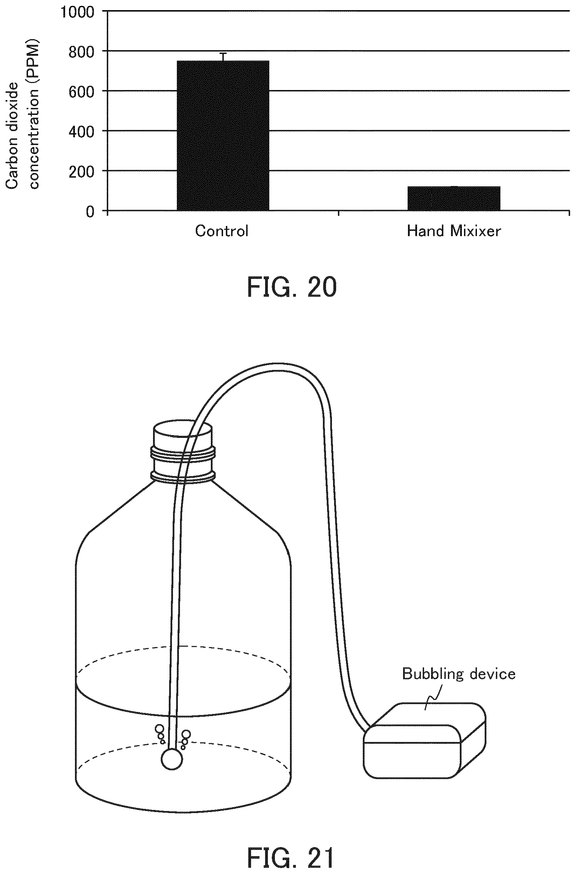

The results are shown in FIG. 20. FIG. 20 is a graph showing the carbon dioxide concentration in the plastic box after the contact. In FIG. 20, the vertical axis indicates the carbon dioxide concentration (PPM), and the horizontal axis indicates, from the left, the control and the termination of the contact. It is to be noted that the value of the carbon dioxide concentration was an average value of measured values of a total of 3 samples. As shown in FIG. 20, after the contact, the carbon dioxide concentration was greatly decreased as compared to that of the control.

As described above, it was verified that carbon dioxide can be fixed by bringing a mixed liquid containing sodium hydroxide and calcium chloride into contact with a gas containing carbon dioxide in a state where the mixed liquid is allowed to stand or shaken in a vessel.

### Reference Example 3

It was examined that carbon dioxide can be fixed by bringing a mixed liquid containing sodium hydroxide and calcium chloride into contact with a gas containing carbon dioxide in a state where the mixed liquid is in a state of mist in a vessel.

A mixed liquid containing the sodium hydroxide and the calcium chloride was prepared in the same manner as in Reference Example 2. A 2 1-PET bottle having a common shape was used, and the inside of the PET bottle was brought into equilibrium with air in the same manner as in Reference Example 2. Thereafter, about 4 ml of the mixed liquid was sprayed into the PET bottle 10 times at intervals of 5 seconds using a sprayer (commercially available one), whereby the mixed liquid was brought into contact with carbon dioxide. The contact was carried out using the PET bottle in a state of being overturned with its side facing down as shown in FIG. 8, and the spraying was carried out in the horizontal direction. Immediately after the contact, the carbon dioxide concentration in the PET bottle was measured in the same manner as in Reference Example 2.

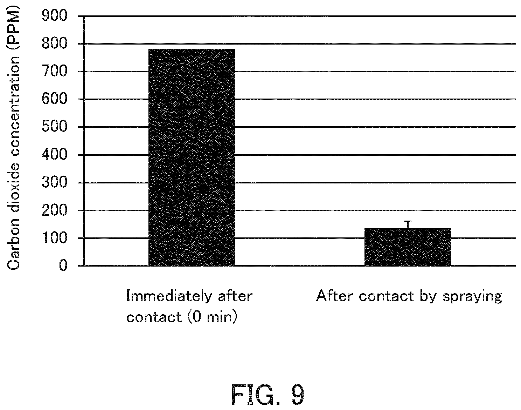

The results are shown in FIG. 9. FIG. 9 is a graph showing the carbon dioxide concentration in the PET bottle after the contact. In FIG. 9, the vertical axis indicates the carbon dioxide concentration (PPM), and the horizontal axis indicates, from the left, immediately after the contact (0 min) and after the contact by spraying. It is to be noted that each value of the carbon dioxide concentration was an average value of measurement values of a total of 4 samples. As shown in FIG. 9, the carbon dioxide concentration in the PET bottle was greatly decreased to about 1/6 due to the contact by the spraying as compared to that immediately after the contact.

Thus, the carbon dioxide concentration was greatly decreased in a short time due to the contact by the spraying. It is considered that the reason for this is that the surface area of the mixed liquid increases greatly by bringing the mixed liquid in a state of mist into contact with the carbon dioxide, so that the mixed liquid can be brought into contact with more gas containing the carbon dioxide.

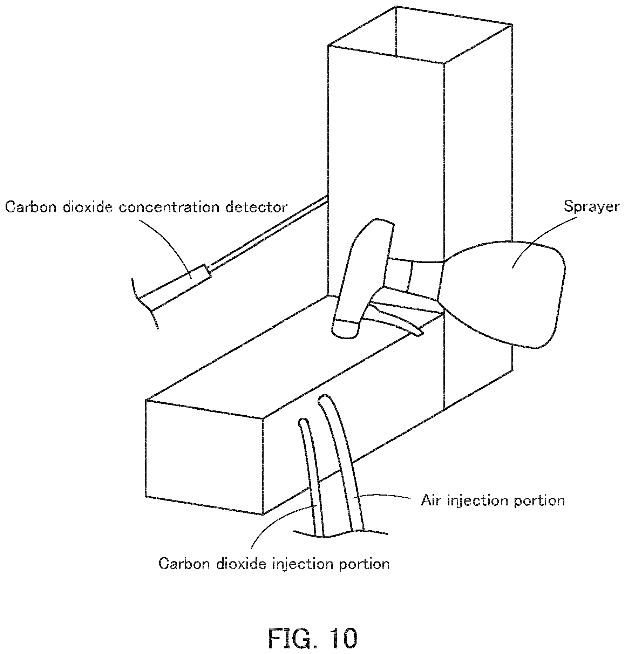

Next, the contact was carried out under a different spraying condition. The contact unit for carrying the contact was prepared as follows. As shown in FIG. 10, two boxes, which are milk packs, (commercially available ones) were connected in an L-shape, holes were formed at two places on the side surface of the lower box by partially cutting it, and silicon tubes were inserted through the holes, thereby providing an air injection portion and a carbon dioxide injection portion. In addition, a hole was formed on the upper surface of the lower box in the same manner so that the mixed liquid can be sprayed from the sprayer into the inside of the box. A large opening was formed at the connection site of the upper and lower boxes to allow carbon dioxide to rise from the lower box to the upper box. The connection site was provided with a gauze layer with 4 fold gauzes (commercially available one). The upper surface of the upper box was opened. In addition, a hole was formed on the side surface of the upper box in the same manner, and a nozzle of a carbon dioxide concentration detector (XP-3140, manufactured by COSMO) was installed.

The injection was carried out with the flow rate of air from the air injection portion being about 100 cm³/sec and the flow rate of carbon dioxide from the carbon dioxide injection portion being 10 cm³/sec until the measured carbon dioxide concentration becomes constant. Thereafter, the mixed liquid was sprayed 10 consecutive times from the sprayer. The spray amount of the mixed liquid was about 4 ml in total at 10 times. The measured value of the carbon dioxide concentration became the lowest value at about 20 seconds after the spraying.

The results are shown in FIG. 11. FIG. 11 is a graph showing the carbon dioxide concentration in the box when the measured value of carbon dioxide becomes the lowest value at about 20 seconds after the contact. In FIG. 11, the vertical axis indicates the carbon dioxide concentration (%) and the horizontal axis indicates, from the left, before the contact and after the contact by the spraying. It is to be noted that each value of the carbon dioxide concentration was an average value of measurement values of a total of 10 samples. As shown in FIG. 11, the carbon dioxide concentration in the box was decreased due to contact by the spraying as compared to that right after the contact.

As described above, it was verified that carbon dioxide can be absorbed by the mixed liquid even when the contact unit is an open system. Further, since the amount of the mixed liquid sprayed was as small as about 4 ml, it was found that a high carbon dioxide concentration can be sufficiently lowered even if the amount of the mixed liquid is small. This showed that the reaction system of the present invention has extremely excellent reaction efficiency.

As described above, it was verified that carbon dioxide can be fixed by bringing a mixed liquid containing sodium hydroxide and calcium chloride into contact with a gas containing carbon dioxide in a state where the mixed liquid is in a state of mist in a vessel.

### Reference Example 4

It was examined that carbon dioxide can be fixed by bringing a mixed liquid containing sodium hydroxide and calcium chloride into contact with a gas containing carbon dioxide by bubbling the gas into the mixed liquid.

A mixed liquid containing the 0.05 N sodium hydroxide and the 0.05 mol/l calcium chloride was prepared in the same manner as in Reference Example 2. 500 ml of the mixed liquid was fed into a plastic bottle (commercially available one, 7.5 cm in width, 7.5 cm in depth, 12 cm in height). Then, as shown in FIG. 21, by bubbling air using a bubbling device for aquarium organism (product name: Bukubuku (one assembled from an air pump, a hose, and an air stone included in the set), manufactured by Kotobuki Kogei Co., Ltd.), the mixed liquid was brought into contact with the air. In FIG. 21, the inside of the plastic bottle is shown in a perspective manner. The bubbling was performed at 20 cm³/sec for 9 hours and 12 hours. The sizes of the bubbles in the bubbling were visually measured by comparison with a scale and were on the order of micrometers to millimeters. After the contact, 5 ml of the mixed liquid was acquired and centrifuged at 3000 rpm for 10 minutes, and then the weight of the precipitate was measured. In addition, an experiment was carried out in the same manner as described above except that a mixed air having a carbon dioxide concentration of 15% obtained by mixing the carbon dioxide into the air was used instead of the air and the bubbling was carried out for 1.5 hours.

The results are shown in FIG. 22. FIG. 22 is a graph showing the weight of the precipitate produced in the mixed liquid due to contact with the carbon dioxide. In FIG. 22, the vertical axis indicates the weight (g) of the precipitate and the horizontal axis indicates experimental conditions. It is to be noted that each value of the weight of the precipitate was an average value of measured values of a total of 4 samples of the mixed liquid. As shown in FIG. 22, the precipitate was produced by the bubbling of the air and the mixed air. In the bubbling of the air, the amount of precipitate was increased with the elapse of time.

Next, the experiment was carried out using a vessel in a different form. As the vessel, a vinyl chloride pipe (commercially available one) having a diameter of 40 mm and a height of 50 cm was used instead of the plastic bottle. A pipe cap (commercially available one) was attached to one end serving as the bottom of the pipe. FIG. 23 is a schematic diagram for explaining the form of the pipe. It is to be noted that the inside of the pipe is shown in a perspective manner in FIG. 23. In addition, the 0.1 N sodium hydroxide solution and the 0.1 mol/l calcium chloride solution were prepared in the same manner as in Reference Example 1. 250 ml of the sodium hydroxide solution and 250 ml of the calcium chloride solution were fed into the pipe and, by bubbling air for about 1 minute, the mixed liquid was brought into contact with the air in the same manner as described above. After the contact, the carbon dioxide concentration of the gas in the upper space of the pipe (height: about 14 cm) was measured in the same manner as in Reference Example 2. Further, the carbon dioxide concentration of the air was measured in the same manner.

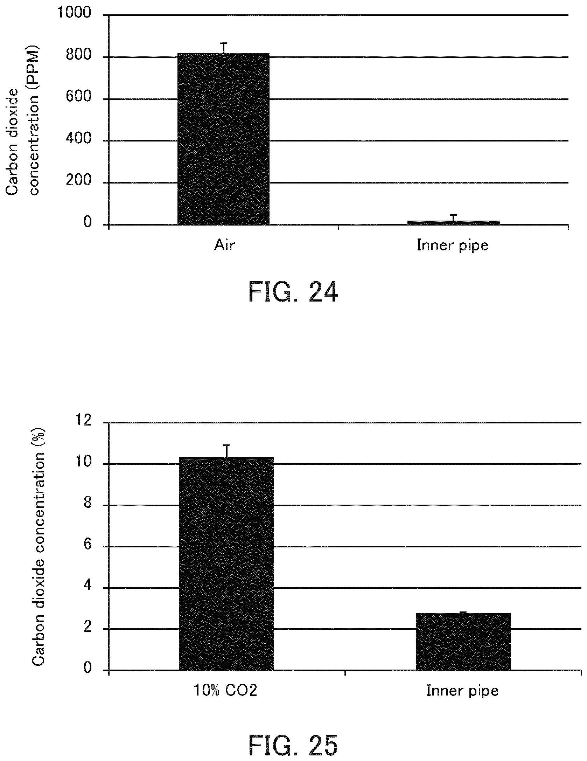

The results are shown in FIG. 24. FIG. 24 is a graph showing the carbon dioxide concentration in the pipe after the contact. In FIG. 24, the vertical axis indicates the carbon dioxide concentration (PPM) and the horizontal axis indicates, from the left, the air (Air) and the gas in the upper space of the pipe (Inner Pipe). It is to be noted that each value of the carbon dioxide concentration was an average value of measured values of a total of 9 samples. As shown in FIG. 24, the carbon dioxide concentration in the pipe was greatly decreased by the contact.

Next, the experiment was carried out in the same manner as described above except that a mixed air having a carbon dioxide concentration of 10% obtained by mixing the carbon dioxide into the air was used instead of the air.

The results are shown in FIG. 25. FIG. 25 is a graph showing the carbon dioxide concentration in the pipe after the contact. In FIG. 25, the vertical axis indicates the carbon dioxide concentration (%) and the horizontal axis indicates, from the left, experimental conditions. It is to be noted that each value of the carbon dioxide concentration was an average value of measured values of a total of 3 samples. As shown in FIG. 25, the carbon dioxide concentration in the pipe was decreased by the contact.

Next, the experiment was carried out with a different amount of the mixed liquid. A mixed liquid containing the 0.05 N sodium hydroxide and the 0.05 mol/l calcium chloride was prepared in the same manner as in Reference Example 2. Each of 100 ml, 200 ml, 300 ml, 400 ml, and 500 ml of the mixed liquid was fed into the pipe, and, by bubbling air for 1 to 2 minutes, the mixed liquid was brought into contact with the air in the same manner as described above. In each of the above conditions, the heights of the liquid levels of the mixed liquids from the bottom surface of the pipe were 7, 14, 22, 29, and 36 cm. After the contact, the carbon dioxide concentration of the gas in the upper space of the pipe (about 10 cm from the upper end of the pipe) was measured in the same manner as in Reference Example 2. Further, the carbon dioxide concentration of the air was measured in the same manner as described above.

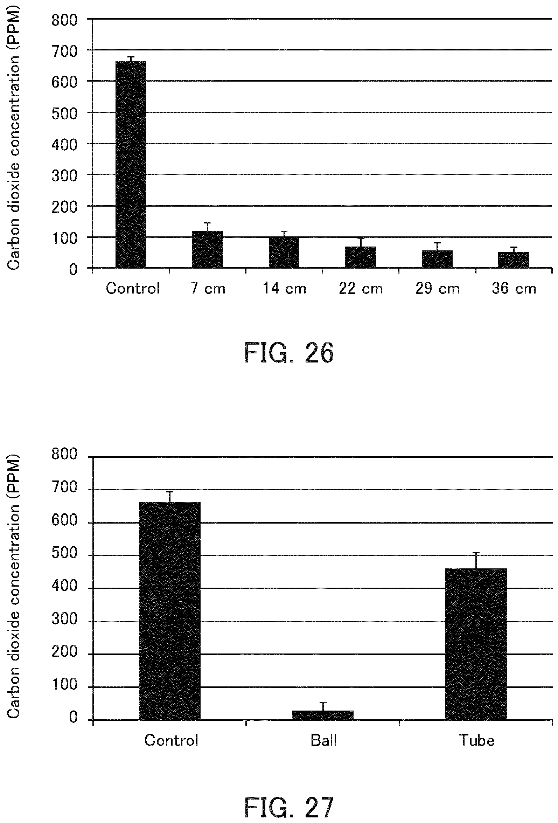

The results are shown in FIG. 26. FIG. 26 is a graph showing the carbon dioxide concentration in the pipe after the contact. In FIG. 26, the vertical axis indicates the carbon dioxide concentration (PPM) and the horizontal axis indicates, from the left, the air (Control) and the heights of the liquid level. It is to be noted that each value of the carbon dioxide concentration was an average value of measured values of a total of 3 samples. As shown in FIG. 26, the carbon dioxide concentration in the pipe was greatly decreased by the contact even when the height of the liquid level was 7 cm. Further, as the height of the liquid level (the amount of the mixed liquid) increased, the more carbon dioxide concentration was decreased.

Next, the experiment was carried out with a different form of the contact. A mixed liquid containing the 0.05 N sodium hydroxide and the 0.05 mol/l calcium chloride was prepared in the same manner as in Reference Example 2. 500 ml of the mixed liquid was fed into the pipe and, by bubbling air for 1 to 2 minutes, the mixed liquid was brought into contact with the air in the same manner as described above. On the other hand, the experiment was carried out in the same manner as described above except that the air stone connected to the tip of the hose of the bubbling device was taken out, and, by directly bubbling air from the hose (about 5 mm in diameter, made of silicon), the mixed liquid was brought into contact with the air. The sizes of the bubbles in the bubbling were visually measured by comparison with a scale and were on the order of millimeters to centimeters. After the contact, the carbon dioxide concentration was measured in the same manner as described above. Further, the carbon dioxide concentration of the air was measured in the same manner.

The results are shown in FIG. 27. FIG. 27 is a graph showing the carbon dioxide concentration in the pipe after the contact. In FIG. 27, the vertical axis indicates carbon dioxide concentrations (PPM) and the horizontal axis indicates, from the left, air (Control), bubbling from the air stone (Ball), and bubbling from the hose (Tube). It is to be noted that each value of the carbon dioxide concentration was an average value of measurement values of a total of 4 samples. As shown in FIG. 27, the carbon dioxide concentration in the pipe was greatly decreased (down to 4.27%) by bubbling air from the air stone. On the other hand, although the carbon dioxide concentration was decreased (down to 69.49%) by bubbling air from the hose, the amount of decrease was small compared with that by bubbling air from the air stone. From this, it was found that it is important that the sizes of bubbles are small in the bubbling in the absorption of carbon dioxide.

As described above, it was verified that carbon dioxide can be fixed by bringing a mixed liquid containing sodium hydroxide and calcium chloride into contact with a gas containing carbon dioxide by bubbling the gas into the mixed liquid.

### Reference Example 5

It was examined that carbon dioxide can be absorbed by bringing a solution containing sodium hydroxide into contact with a gas containing carbon dioxide.

The 0.05 N sodium hydroxide solution was prepared in the same manner as in Reference Example 1. A 2 1-PET bottle having a common shape was used, and the inside of the PET bottle was brought into equilibrium with air in the same manner as in Reference Example 2. Thereafter, 10 ml of the sodium hydroxide solution was fed into the PET bottle and allowed to stand, whereby the solution was brought into contact with carbon dioxide in the atmosphere. The carbon dioxide concentration in the PET bottle at 0 minutes after (immediately after the contact), at 15 minutes after, at 30 minutes after, and at 60 minutes after the contact was measured in the same manner as in Reference Example 2.

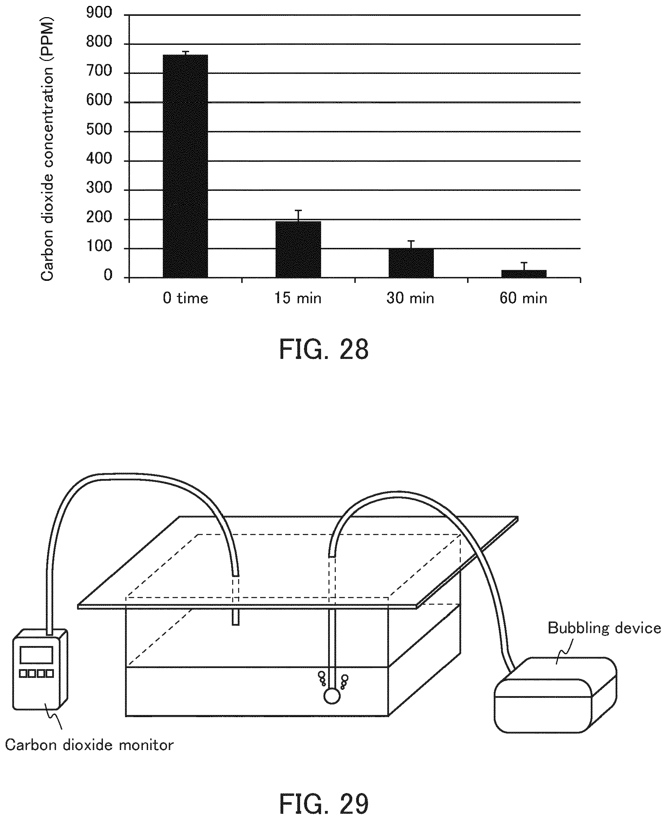

The results are shown in FIG. 28. FIG. 28 is a graph showing the carbon dioxide concentration in the PET bottle after the contact. In FIG. 28, the vertical axis indicates the carbon dioxide concentration (PPM) and the horizontal axis indicates the elapsed time (min) after the contact. It is to be noted that each value of the carbon dioxide concentration was an average value of measured values of a total of 3 samples. As shown in FIG. 28, the carbon dioxide concentration in the PET bottle was decreased at 15 minutes after, at 30 minutes after, and at 60 minutes after the contact as compared to that immediately after the contact.

Next, the contact was carried out with a different form of the contact. Instead of the PET bottle, a 2 1-plastic box (commercially available one) shown in FIG. 29 was used. In FIG. 29, the inside of the plastic box is shown in a perspective manner. 500 ml of the 0.1 N sodium hydroxide solution was fed into the plastic box, and then the upper side of the plastic box was covered with a plastic plate as shown in FIG. 29. By bubbling air using a bubbling device (product name: Micro bubbler (F-1056-002) manufactured by Fron Industry Co., Ltd.), the solution was brought into contact with the air. The bubbling was performed at 20 cm³/sec. The sizes of the bubbles in the bubbling were visually measured by comparison with a scale and were on the order of micrometers to millimeters. Then, the carbon dioxide concentration in the upper space in the plastic box at immediately after (0 minutes), at 5 minutes after, at 10 minutes after, and at 15 minutes after the start of the contact was measured using the carbon dioxide monitor.

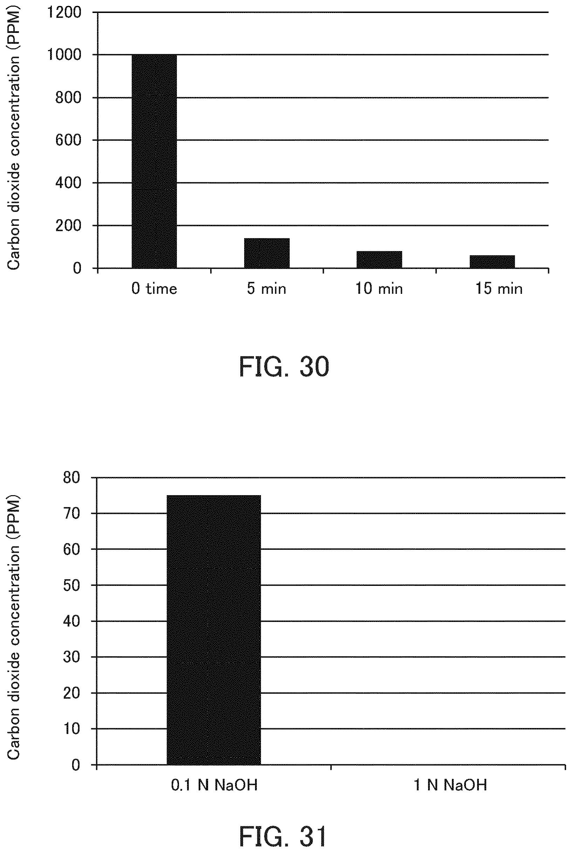

The results are shown in FIG. 30. FIG. 30 is a graph showing the carbon dioxide concentration in the plastic box after the contact. In FIG. 30, the vertical axis indicates the carbon dioxide concentration (PPM) and the horizontal axis indicates, from the left, immediately after (0 time), 5 minutes after (5 min), 10 minutes after (10 minutes), and 15 minutes after (15 minutes) the start of the contact. As shown in FIG. 30, the carbon dioxide concentration in the plastic box was greatly decreased at 5 minutes after the start of the contact. Thereafter, depending on the elapsed time after the contact, the carbon dioxide concentration was gradually decreased.

Next, the experiment was carried out using a vessel in a different form. As the vessel, the pipe described in Reference Example 4 was used instead of the plastic bottle. 200 ml of the 0.1 N sodium hydroxide solution was fed into the pipe and, by bubbling the mixed air having a carbon dioxide concentration of 10%, the solution was brought into contact with the mixed air in the same manner as described above. Then, the carbon dioxide concentration in the upper space in the pipe was measured using the carbon dioxide monitor continuously from the start of the contact until 5 minutes later. In addition, the carbon dioxide concentration was measured until 2 minutes after the start of the contact in the same manner as described above except that the 1 N sodium hydroxide solution was used.

The results are shown in FIG. 31. FIG. 31 is a graph showing the carbon dioxide concentration in the pipe at 2 minutes after the start of the contact. In FIG. 31, the vertical axis indicates the carbon dioxide concentration (PPM) and the horizontal axis indicates the sodium hydroxide solution concentration. As shown in FIG. 31, when the 0.1 N sodium hydroxide solution was used, the carbon dioxide concentration in the pipe was decreased rapidly immediately after the start of the contact and was decreased to 7.5% at 2 minutes after the contact as compared to the value immediately after the start of the contact. Thereafter, the concentration was almost constant until 5 minutes after the start of the contact. Further, when the 1 N sodium hydroxide solution was used, similarly, the carbon dioxide concentration in the pipe was decreased rapidly immediately after the start of the contact, and became "0" at 2 minutes after the contact.

As described above, it was verified that carbon dioxide can be absorbed by bringing a solution containing sodium hydroxide into contact with a gas containing carbon dioxide.

### Reference Example 6

It was examined that carbon dioxide can be fixed by bringing a mixed liquid containing sodium hydroxide and further containing a chloride of a Group 2 element and a chloride of a divalent metal element into contact with a gas containing carbon dioxide.

As the chloride of a Group 2 element and the chloride of a divalent metallic element, magnesium chloride (MgCh; manufactured by Wako Pure Chemical Industries, Ltd.), zinc chloride (ZnCh; manufactured by Wako Pure Chemical Industries, Ltd.), strontium chloride (SrCh, manufactured by Wako Pure Chemical Industries, Ltd.), and barium chloride (BaCh; manufactured by Wako Pure Chemical Industries, Ltd.) were used. Each of the chlorides was diluted with distilled water to prepare 0.1 mol/l of each metal chloride solution. In addition, the 0.1 N sodium hydroxide solution was prepared in the same manner as in Reference Example 1.

2 ml of each of the metal chloride solutions and 1 ml of the sodium hydroxide solution were mixed. By bubbling carbon dioxide, the mixed liquid was brought into contact with the carbon dioxide in the same manner as in Reference Example 1. After the mixing and after contact with the carbon dioxide, the precipitation amount was calculated in the same manner as in Reference Example 1.

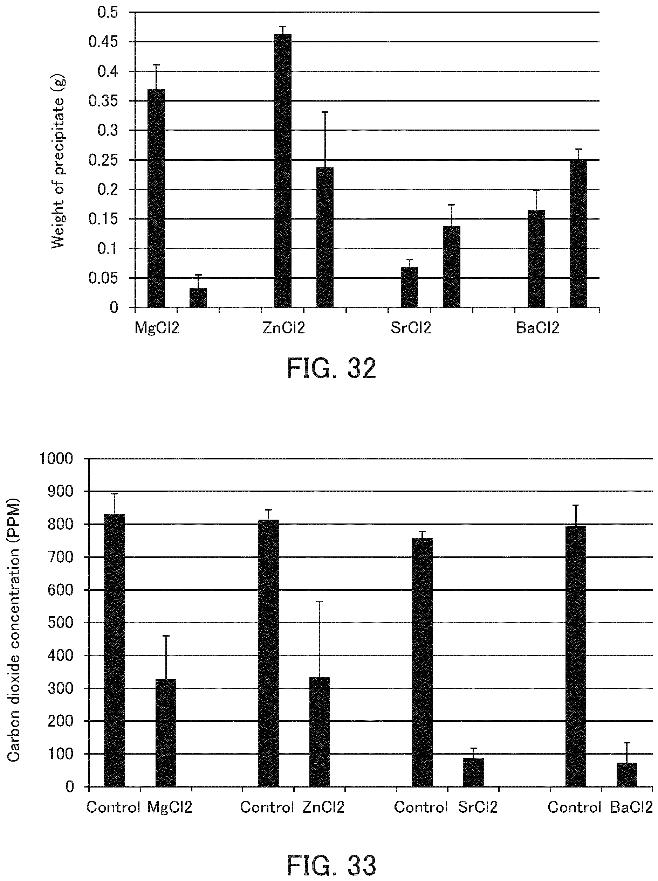

The results are shown in FIG. 32. FIG. 32 is a graph showing the weight of the precipitate produced in the mixed liquid due to contact with the carbon dioxide. In FIG. 32, the vertical axis indicates the weight (g) of the precipitate per test tube, and the horizontal axis indicates each metal chloride contained in the mixed liquid. Each left bar shows the result after the mixing and each right bar shows the result after contact with the carbon dioxide. It is to be noted that each value of the weight of the precipitate was an average value of measured values of a total of 4 samples of the mixed liquid. As shown in FIG. 32, when the magnesium chloride solution and the zinc chloride solution were used, the precipitation amount was increased greatly after the mixing, and the precipitation amount was decreased after contact with the carbon dioxide. Further, when the strontium chloride solution and the barium chloride solution were used, the precipitation amount was increased after the mixing, and the precipitation amount was further increased after contact with the carbon dioxide.

Next, the chloride of a Group 2 element and the chloride of a divalent metal element were used, and the carbon dioxide concentration after the contact was measured.

The pipe described in Reference Example 4 was used as the vessel. 50 ml of the 0.1 N sodium hydroxide solution and 50 ml of each metal chloride solution having a concentration of 0.1 mol/l were fed into the pipe, and, by bubbling air, the mixed liquid was brought into contact with the air in the same manner as in Reference Example 4. After the contact, the carbon dioxide concentration of the gas in the upper space of the pipe (about 14 cm in height) was measured in the same manner as in Reference Example 2. In the measurement, it was confirmed that the value of the carbon dioxide concentration became almost constant at 2 to 3 minutes after the contact, and this value was used as a measurement value. Further, as a control, the carbon dioxide concentration of the air was measured in the same manner.

The results are shown in FIG. 33. FIG. 33 is a graph showing the carbon dioxide concentration in the pipe after the contact. In FIG. 33, the vertical axis indicates the carbon dioxide concentration (PPM) and the horizontal axis indicates metal chlorides. It is to be noted that the value of the carbon dioxide concentration was an average value of measured values of a total of 3 samples. As shown in FIG. 33, the carbon dioxide concentration in the pipe was decreased due to the contact with any type of the metal chlorides as compared to the value of the control. In particular, when the strontium chloride solution and the barium chloride solution were used, the carbon dioxide concentration was greatly decreased.

As described above, it was verified that carbon dioxide can be fixed by bringing a mixed liquid containing sodium hydroxide and further containing a chloride of a Group 2 element and a chloride of a divalent metal element into contact with a gas containing carbon dioxide.

### Reference Example 7

It was examined that carbon dioxide can be fixed by bringing a mixed liquid containing sodium hydroxide and calcium chloride into contact with a gas containing carbon dioxide under a predetermined temperature condition.

A mixed liquid containing the 0.05 N sodium hydroxide and the 0.05 mol/l calcium chloride was prepared in the same manner as in Reference Example 2. 3 ml of the sodium hydroxide solution of each concentration and 3 ml of the 0.1 mol/l calcium chloride solution were fed into a 10 ml-test tube and mixed, and, by bubbling carbon dioxide, the mixed liquid was brought into contact with the carbon dioxide in the same manner as in Reference Example 1. The bubbling was performed at 2 cm³/sec for 10 seconds. During the contact, the temperatures of the mixed liquids were maintained at 5°C, 20°C, 30°C, 40°C, 50°C, 60°C, 70°C, and 80°C, respectively, using Unithermo Shaker NTS-120, EYLEA, (Tokyo Rikakikai Co., Ltd.). After the contact, the precipitation amount was calculated in the same manner as in Reference Example 1.

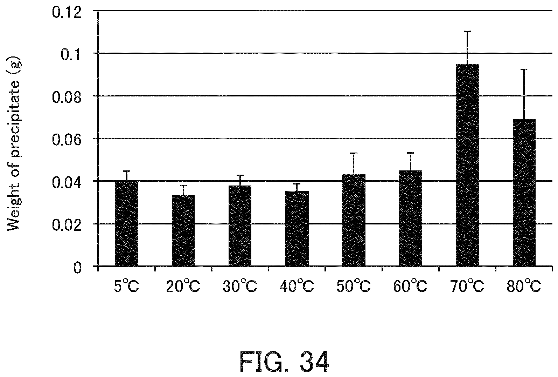

The results are shown in FIG. 34. FIG. 34 is a graph showing the weight of the precipitate produced in the mixed liquid due to contact with the carbon dioxide. In FIG. 34, the vertical axis indicates the weight (g) of the precipitate per test tube, and the horizontal axis indicates the temperature. 3 to 5 experiments were carried out for each temperature, and the measured values of 4 to 8 samples were acquired in each experiment, the average of these measured values was determined to be the weight of the precipitate. As shown in FIG. 34, the precipitate was produced after contact with the carbon dioxide under any temperature condition. The precipitation amount was almost constant when the temperature of the mixed liquid was between 5°C and 60°C, and was greatly increased when the temperature of the mixed liquid was at 70°C. Even when the temperature of the mixed liquid was 80°C, the value of the precipitation amount was larger than the constant value obtained when the temperature of the mixed liquid was between 5°C and 60°C.

As described above, it was verified that carbon dioxide can be fixed by bringing a mixed liquid containing sodium hydroxide and calcium chloride into contact with a gas containing carbon dioxide under a predetermined temperature condition. In particular, it was verified that the fixation of the carbon dioxide is suitable for treatment at high temperatures.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

### Industrial Applicability

As described above, the present invention can provide a new method for fixing carbon dioxide. Therefore, the present invention can be extremely useful in the disposal of combustion exhaust gas containing carbon dioxide and the like.

## Claims

1. A method for fixing carbon dioxide, comprising:
a first contact step of bringing a solution containing sodium hydroxide into contact with a gas containing carbon dioxide; and
a second contact step of adding at least one of a chloride of a Group 2 element or a chloride of a divalent metal element to the solution after the first contact step.

2. The method for fixing carbon dioxide according to claim 1, wherein
at least one of the chloride of a Group 2 element or the chloride of a divalent metal element is calcium chloride.

3. The method for fixing carbon dioxide according to claim 1 or 2, wherein
a concentration of the sodium hydroxide in the solution is 0.05 N or more.

4. The method for fixing carbon dioxide according to any one of claims 1 to 3, wherein
a concentration of the calcium chloride in a mixed liquid after addition is 0.05 mol/l or more.

5. The method for fixing carbon dioxide according to any one of claims 1 to 4, wherein
in at least one of the first contact step and the second contact step, the solution and the mixed liquid are brought into contact with the gas by feeding the gas into the solution and the mixed liquid after addition.

6. The method for fixing carbon dioxide according to any one of claims 1 to 5, wherein
in at least one of the first contact step and the second contact step, a temperature of the solution and a temperature of the mixed liquid after addition are 70°C or higher.

7. The method for fixing carbon dioxide according to any one of claims 1 to 6, further comprising:
a cooling step of cooling the mixed liquid after addition after the second contact step.

8. A method for producing fixed carbon dioxide, comprising:
a fixation step of fixing carbon dioxide, wherein
the fixation step is carried out by the method for fixing carbon dioxide according to any one of claims 1 to 7.

9. A fixed carbon dioxide production apparatus, comprising:
a contact unit that brings a solution containing sodium hydroxide into contact with a gas containing carbon dioxide; and
an adding unit that adds at least one of a chloride of a Group 2 element or a chloride of a divalent metal element to the solution.

10. The fixed carbon dioxide production apparatus according to claim 9, wherein
at least one of the chloride of a Group 2 element or the chloride of a divalent metal element is calcium chloride.

11. The fixed carbon dioxide production apparatus according to claim 9 or 10, wherein the contact unit comprises:
a vessel that can contain the solution; and
a gas feeding unit that can feed the gas into the solution.

12. The fixed carbon dioxide production apparatus according to any one of claims 9 to 11, further comprising:
a cooling unit that cools the solution after being reacted with the gas.
